# EUROPEAN PATENT SPECIFICATION

(11) **EP 2 845 445 B1**
(45) Date of publication and mention of the grant of the patent: **11.08.2021**
(21) Application number: 13727651.5
(22) Date of filing: 25.04.2013
(51) Int. Cl.: H05B 45/3578, F21K 9/27

(54) **CONVERSION CIRCUIT BETWEEN FLUORESCENT BALLAST AND LED**
WANDLERSCHALTUNG ZWISCHEN EINEM VORSCHALTGERÄT FÜR LEUCHTSTOFFLAMPEN UND EINER LED
CIRCUIT DE CONVERSION ENTRE UN BALLAST POUR SOURCES D'ÉCLAIRAGE FLUORESCENT ET UNE DEL

(30) Priority: 03.05.2012 US 201261641949 P
(43) Date of publication of application: 11.03.2015
(73) Proprietor: Signify Holding B.V., 5656 AE Eindhoven (NL)
(72) Inventor: TAO, Haimin, NL-5656 AE Eindhoven (NL); DEIXLER, Peter, NL-5656 AE Eindhoven (NL)
(74) Representative: van Eeuwijk, Alexander Henricus Waltherus
(86) International application number: PCT/IB2013/053263
(87) International publication number: WO 2013/164739

(56) References cited:
- EP-A2- 2 178 345
- WO-A1-2009/136322
- WO-A2-2011/063302
- US-A1- 2008 197 786
- US-A1- 2010 118 148
- US-A1- 2011 043 127
- US-A1- 2011 254 465

## Description

### FIELD OF THE INVENTION

The invention relates to a conversion circuit for converting first signals coming from a fluorescent ballast into second signals for feeding a light circuit via a rectifier circuit. The invention further relates to a light circuit and to a method

Examples of such a fluorescent ballast are self-oscillating ballasts and fixed frequency ballasts and chip controlled ballasts. Examples of such a light circuit are light circuits comprising one or more light emitting diodes of whatever kind and in whatever combination. Fluorescent ballasts are designed for feeding discharge lamps. When replacing the discharge lamps by light circuits comprising one or more light emitting diodes, without replacing the fluorescent ballasts, conversion circuits should be introduced between the fluorescent ballasts and the light circuits.

### BACKGROUND OF THE INVENTION

US 2011 / 0254465 A1 discloses a light emitting diode drive circuit device with a resonant network correction circuit. This resonant network correction circuit has four inputs and four outputs and is coupled to two rectifying circuits and is therefore relatively complex.

EP 2 178 345 A2 discloses a LED fluorescent lamp provided with a plurality of LEDs connected in series between a plurality of external connection pins. In series between the LEDs and the external connection pins, a conversion circuit with one or more capacitors is provided for varying the impedance of an electronic fluorescent lamp ballast, which ballast is connected to the LED fluorescent lamp through the external connection pins. The conversion circuit further comprises diodes that may allow a current to flow through the LEDs in forward direction only. This conversion circuit is not optimal with respect to its high frequency behavior.

WO 2009/136322 discloses a light emitting system, the system comprising a light emitting diode, a socket adapter for retrofitting a fluorescent lamp and an electric circuit. The electric circuit is adapted for emulating the presence of a fluorescent lamp to a fluorescent lamp driver.

WO 2011/063302 discloses a fluorescent light fixture assembly including a ballast and a novel lighting element that includes an array of LEDs and at least one converter module that enables the existing ballast providing an AC power input to supply DC power to the LED array. The lighting element includes a body that contains the LED array and the converter modules and shares the configuration of the lighting element that is to be retrofitted. The lighting element receives power from the pre-existing ballast, wherein the converter module provides a constant current source to power the LED array. Thus, the lighting element, including the converter module, replaces the conventional fluorescent light tube in a cost-effective retrofit manner with the existing ballast.

US 2011/0043127 discloses an LED assembly having an AC voltage applied from a fluorescent lamp fixture via one or more power supply connectors belonging to a base which can be attached to the fluorescent lamp fixture, and the LED assembly includes a resistive circuit having impedance equivalent to that of a filament of a fluorescent lamp which can be attached to the fluorescent lamp fixture, a rectifier circuit for rectifying an AC voltage supplied via the resistive circuit, and a load circuit to be operated in response to a supply of a voltage rectified by the rectifier circuit.

### SUMMARY OF THE INVENTION

It is an object of the invention to provide an improved conversion circuit that is relatively simple. Further objects of the invention are to provide a light circuit and a method.

According to a first aspect, a conversion circuit is provided for converting first signals coming from a fluorescent ballast into second signals for feeding a light circuit, the light circuit comprising at least one light emitting diode, the conversion circuit comprising:
- an input stage with four inputs for receiving the first signals,
- a reactive stage for coupling the output stage to the input stage and configured to reduce an amplitude one of the first signals,
- a rectifier circuit, and
- an output stage with two outputs for supplying the second signals,
wherein the conversion circuit further comprises a high frequency filter at the output stage.

By having introduced the output stage comprising a high frequency filter, in particular a capacitor between the two outputs, a relatively simple conversion circuit has been created with an improved high frequency behavior, in particular with respect to flickering of the LEDs. Such a relatively simple conversion circuit is relatively low-cost and relatively robust.

A reactive stage that couples an output stage to an input stage in a reactive way introduces a reactive transfer function between the input stage and the output stage. The reactive stage for example detunes a resonant tank in the fluorescent ballast and/or for example sets a value of a current signal flowing through the light circuit.

The rectifier circuit comprises four diodes in a rectifier bridge. The rectifier circuit forms part of (the output stage of) the conversion circuit, in which case the inputs of the rectifier circuit are to be coupled to the reactive stage and in which case the outputs of the rectifier circuit form the outputs of the conversion circuit. According to an example which does not fall under the scope of protection, the rectifier circuit may be located outside the conversion circuit, in which case the inputs of the rectifier circuit are to be coupled to the outputs of the conversion circuit and in which case the outputs of the rectifier circuit are to be coupled to inputs of the light circuit. When being located outside the conversion circuit, the rectifier circuit may form part of the light circuit or not.

The conversion circuit is defined by the reactive stage comprising a reactive circuit for reducing an amplitude of one or more of the first and second signals. The first signals are for example currents flowing through the fluorescent ballast, and the second signals are for example currents flowing through the light circuit.

According to the invention, the conversion circuit is defined by the reactive circuit comprising an inductor coupled serially to a part of the input stage and a part of the output stage. An other part of the input stage and an other part of the output stage may be coupled directly. The inductor reduces amplitudes of currents flowing through the fluorescent ballast as well as of currents flowing through the light circuit.

An embodiment of the conversion circuit is defined by the reactive circuit comprising a first inductor coupled serially to a first part of the input stage and a first part of the output stage and a second inductor coupled serially to a second part of the input stage and a second part of the output stage. The inductors reduce amplitudes of currents flowing through the fluorescent ballast as well as of currents flowing through the light circuit.

An example of the conversion which is out of scope of the invention is defined by the reactive circuit comprising a capacitor coupled in parallel to the input stage and the output stage. The capacitor reduces amplitudes of currents flowing through the light circuit.

An embodiment of the conversion circuit is defined by the reactive circuit comprising a capacitor coupled in parallel to the input stage and comprising an inductor coupled serially to a part of the input stage and a part of the output stage. This embodiment is a combination of previous embodiments and examples.

An embodiment of the conversion circuit is defined by the four inputs to be coupled to four outputs of the fluorescent ballast, first and second inputs of the four inputs being coupled to each other, and third and fourth inputs of the four inputs being coupled to each other. A (single-lamp) fluorescent ballast usually has four outputs that are to be coupled to the four inputs of the conversion circuit. For example for fluorescent ballasts in the form of self-oscillating ballasts, the first and second inputs of the four inputs can be coupled to each other, and the third and fourth inputs of the four inputs can be coupled to each other. According to an example which is out of scope of the invention, an adaptation circuit may be located between this fluorescent ballast and the conversion circuit, which adaptation circuit takes care of combining the first and second inputs of the four inputs, and of combining the third and fourth inputs of the four inputs. As a result, the conversion circuit then only needs to have two inputs.

An embodiment of the conversion circuit is defined by the four inputs to be coupled to four outputs of the fluorescent ballast, first and second inputs of the four inputs being coupled to each other via a serial connection of first and second resistors, and third and fourth inputs of the four inputs being coupled to each other via a serial connection of third and fourth resistors, a first interconnection between the first and second resistors and a second interconnection between the third and fourth resistors being coupled to the reactive stage. A (single-lamp) fluorescent ballast usually has four outputs that are to be coupled to the four inputs of the conversion circuit. For example for fluorescent ballasts in the form of chip controlled ballasts, the first and second inputs of the four inputs can be coupled to each other via a serial connection of first and second resistors, and the third and fourth inputs of the four inputs can be coupled to each other via a serial connection of third and fourth resistors. According to an example which is out of scope of the invention, an adaptation circuit may be located between this fluorescent ballast and the conversion circuit, which adaptation circuit comprises the four resistors and takes care of combining the first and second inputs of the four inputs, and of combining the third and fourth inputs of the four inputs. As a result, the conversion circuit then only needs to have two inputs.

According to an unclaimed aspect, a fluorescent ballast is provided comprising the conversion circuit as defined above.

An example of the fluorescent ballast is defined by the reactive stage comprising a reactive circuit for reducing an amplitude of one or more of the first and second signals, the reactive circuit comprising an inductor coupled serially to a part of the input stage and a part of the output stage, the inductor being located inside the fluorescent ballast or a first part of the inductor being located inside the fluorescent ballast and a second part of the inductor being located outside the fluorescent ballast. When being located outside the fluorescent ballast, the second part of the inductor may be located inside the light circuit or not.

An example of the fluorescent ballast is defined by the reactive stage comprising a reactive circuit for reducing an amplitude of one or more of the first and second signals, the reactive circuit comprising a first inductor coupled serially to a first part of the input stage and a first part of the output stage and a second inductor coupled serially to a second part of the input stage and a second part of the output stage, the first and second inductors being located inside the fluorescent ballast or the first inductor being located inside the fluorescent ballast and the second inductor being located outside the fluorescent ballast. When being located outside the fluorescent ballast, the second inductor may be located inside the light circuit or not.

According to an embodiment, a light circuit is provided comprising the conversion circuit as defined above, the light circuit comprising at least one light emitting diode.

An embodiment of the light circuit is defined by the reactive stage comprising a reactive circuit for reducing an amplitude of one or more of the first and second signals, the reactive circuit comprising an inductor coupled serially to a part of the input stage and a part of the output stage, the inductor being located inside the light circuit or a first part of the inductor being located inside the light circuit and a second part of the inductor being located outside the light circuit. When being located outside the light circuit, the second part of the inductor may be located inside the fluorescent ballast or not.

An embodiment of the light circuit is defined by the reactive stage comprising a reactive circuit for reducing an amplitude of one or more of the first and second signals, the reactive circuit comprising a first inductor coupled serially to a first part of the input stage and a first part of the output stage and a second inductor coupled serially to a second part of the input stage and a second part of the output stage, the first and second inductors being located inside the light circuit or the first inductor being located inside the light circuit and the second inductor being located outside the light circuit. When being located outside the light circuit, the second inductor may be located inside the fluorescent ballast or not.

According to a second aspect, a method is provided for replacing a discharge lamp by a light circuit comprising at least one light emitting diode, the method comprising a step of installing a conversion circuit as defined above between a fluorescent ballast and the light circuit.

An insight could be that complexity is to be reduced. A basic idea could be that the conversion circuit should comprise an input stage with at least two inputs, an output stage with two outputs, and a reactive stage for coupling the output stage to the input stage.

A problem to provide an improved conversion circuit that is relatively simple has been solved. A further advantage could be that the conversion circuit is relatively low-cost and relatively robust.

These and other aspects of the invention will be apparent from and elucidated with reference to the embodiments described hereinafter.

### BRIEF DESCRIPTION OF THE DRAWINGS

In the drawings:
Fig. 1 shows a mains input, a prior art fluorescent ballast and a discharge lamp,
Fig. 2 shows a prior art fluorescent ballast in greater detail,
Fig. 3 shows a fluorescent ballast, a conversion circuit and a light circuit as separate modules,
Fig. 4 shows a fluorescent ballast and a light circuit as separate modules, the fluorescent ballast comprising a conversion circuit,
Fig. 5 shows a fluorescent ballast and a light circuit as separate modules, the light circuit comprising a conversion circuit,
Fig. 6 shows a fluorescent ballast and a light circuit as separate modules, the fluorescent ballast and the light circuit each comprising a part of a conversion circuit,
Fig. 7 shows a conversion circuit in greater detail,
Fig. 8 shows a first embodiment of a conversion circuit,
Fig. 9 shows a second embodiment of a conversion circuit,
Fig. 10 shows an example of a conversion circuit which, as such, does not fall under the scope of the present invention, and
Fig. 11 shows a power value versus inductance value graph.

### DETAILED DESCRIPTION OF EMBODIMENTS

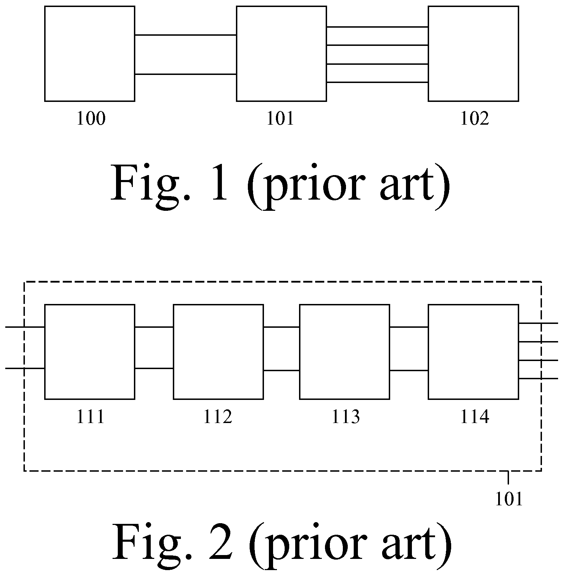

In the Fig. 1, a mains input 100, a prior art fluorescent ballast 101 and a discharge lamp 102 are shown. Two outputs of the mains input 100 are coupled to two inputs of the fluorescent ballast 101, and four outputs of the fluorescent ballast 101 are coupled to four inputs of the discharge lamp 102.

In the Fig. 2, a prior art fluorescent ballast 101 is shown in greater detail. The fluorescent ballast 101 comprises for example an electro magnetic induction filter 111, a rectifier 112, a power factor corrector 113 and a half bridge 114 including a resonant tank.

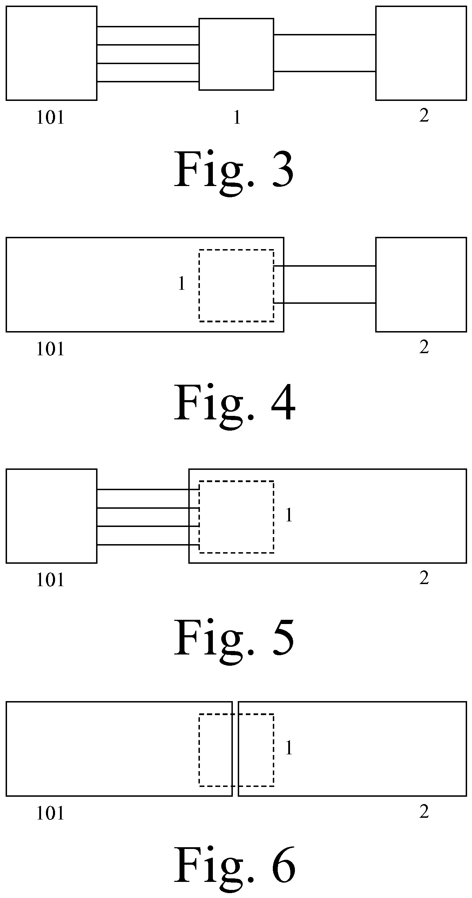

In the Fig. 3, a fluorescent ballast 101, a conversion circuit 1 and a light circuit 2 are shown as separate modules. The light circuit 2 comprises one or more light emitting diodes of whatever kind and in whatever combination.

In the Fig. 4, a fluorescent ballast 101 and a light circuit 2 are shown as separate modules, the fluorescent ballast 101 now comprising a conversion circuit 1.

In the Fig. 5, a fluorescent ballast 101 and a light circuit 2 are shown as separate modules, the light circuit 2 now comprising a conversion circuit 1.

In the Fig. 6, a fluorescent ballast 101 and a light circuit 2 are shown as separate modules, the fluorescent ballast 101 and the light circuit 2 each comprising a part of a conversion circuit 1.

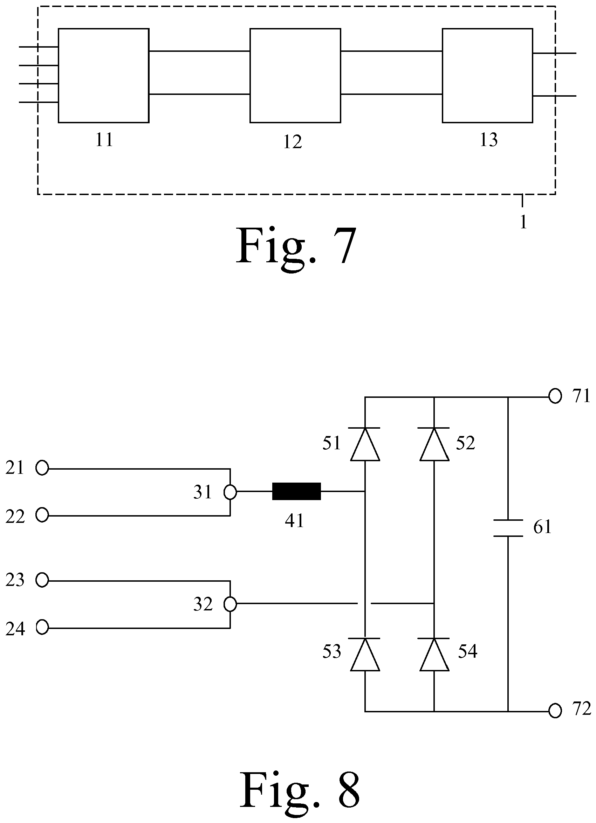

In the Fig. 7, a conversion circuit 1 is shown in greater detail. The conversion circuit 1 comprises an input stage 11, a reactive stage 12 and an output stage 13. Here, the input stage 11 comprises four inputs.

In case the fluorescent ballast 101 and the light circuit 2 each comprise a part of the conversion circuit 1, as shown in the Fig. 6, the input stage 11 may form part of the fluorescent ballast 101 and the output stage 13 may form part of the light circuit 2 and the reactive stage 12 may form part of the fluorescent ballast 101 or of the light circuit 2, or a first part of the reactive stage 12 may form part of the fluorescent ballast 101 and a second part of the reactive stage 12 may form part of the light circuit 2.

In the Fig. 8, a first example of a conversion circuit 1 is shown. Two inputs 21 and 22 are coupled to each other to create an interconnection 31, and two inputs 23 and 24 are coupled to each other to create an interconnection 32. The interconnection 31 is coupled via a first inductor 41 to an anode of a diode 51 and to a cathode of a diode 53. The interconnection 32 is coupled to an anode of a diode 52 and to a cathode of a diode 54. Cathodes of the diodes 51 and 52 are coupled to an output 71, and anodes of the diodes 53 and 54 are coupled to an output 72. A filtering capacitor 61 for filtering a high frequency ripple signal is coupled to both outputs 71 and 72. A first part of the first inductor 41 may be located inside the conversion circuit 1 and a second part of the first inductor 41 may be located outside the conversion circuit 1, for example inside the light circuit 2.

In view of the Fig. 7 and 8, the inputs 21-24 and the interconnections 31 and 32 are for example parts of the input stage 11. The first inductor 41 is for example a part of the reactive stage 12. And the diodes 51-54 and the filtering capacitor 61 and the outputs 71 and 72 are for example parts of the output stage 13. Firstly, alternatively, the inputs 21 and 22 as coupled to each other and the inputs 23 and 24 as coupled to each other may be located outside the input stage 11 and may form part of an adaptation circuit not shown, with the interconnection 31 as coupled to said inputs 21 and 22 and the interconnection 32 as coupled to said inputs 23 and 24 being inputs of the input stage 11. Secondly, alternatively, the diodes 51-54 and/or the filtering capacitor 61 may be located outside the output stage 13 and may be located in a separate module between the output stage 13 and the light circuit 2 or may be located inside the light circuit 2.

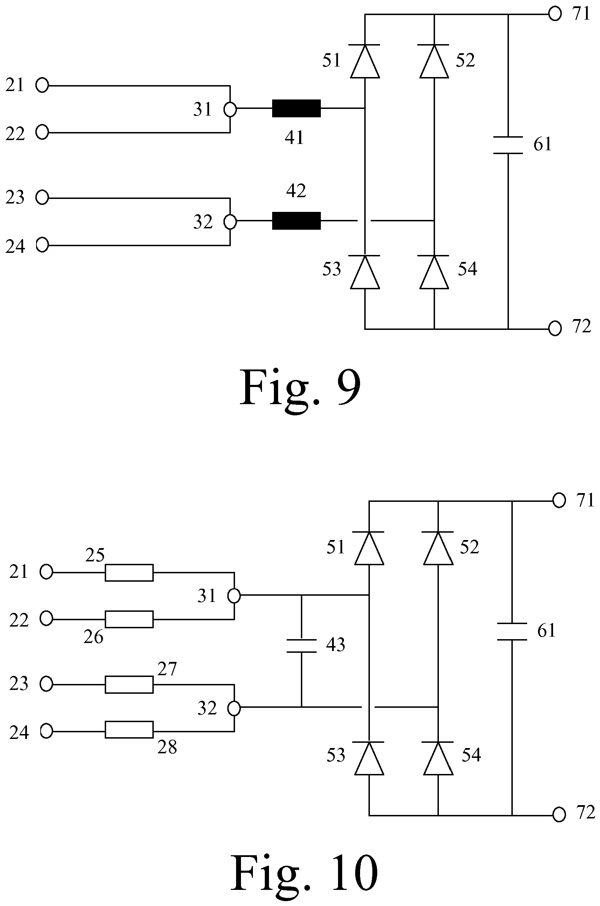

In the Fig. 9, a second embodiment of a conversion circuit 1 is shown, that only differs from the first embodiment in that the interconnection 32 and the diodes 52 and 54 are now coupled to each other via a second inductor 42. Both inductors 41 and 42 may be inductively coupled or not. Both inductors 41 and 42 may be located inside the conversion circuit 1 or one of them may be located inside the conversion circuit 1 and the other one may be located outside the conversion circuit 1, for example inside the light circuit 2.

The first and second embodiments shown in the Fig. 8 and 9 are for example related to fluorescent ballasts 101 in the form of self-oscillating ballasts. For this kind of ballasts it is allowed to connect first and second outputs of the fluorescent ballast to each other and to connect third and fourth outputs of the fluorescent ballast to each other.

In the Fig. 10, an example of a conversion circuit 1 is shown. Two inputs 21 and 22 are coupled to each other via serial resistors 25 and 26 to create an interconnection 31, and two inputs 23 and 24 are coupled to each other via serial resistors 27 and 28 to create an interconnection 32. The interconnections 31 and 32 are coupled to each other via a capacitor 43. The interconnection 31 is coupled to an anode of a diode 51 and to a cathode of a diode 53. The interconnection 32 is coupled to an anode of a diode 52 and to a cathode of a diode 54. Cathodes of the diodes 51 and 52 are coupled to an output 71, and anodes of the diodes 53 and 54 are coupled to an output 72. A filtering capacitor 61 for filtering a high frequency ripple signal is coupled to both outputs 71 and 72.

In view of the Fig. 7 and 10, the inputs 21-24 and the resistors 25-28 and the interconnections 31 and 32 are for example parts of the input stage 11. The capacitor 43 is for example a part of the reactive stage 12. And the diodes 51-54 and the filtering capacitor 61 and the outputs 71 and 72 are for example parts of the output stage 13. Firstly, alternatively, the inputs 21-24 and the resistors 25-28 may be located outside the input stage 11 and may form part of an adaptation circuit not shown, with the interconnections 31 and 32 being inputs of the input stage 11. Secondly, alternatively, the diodes 51-54 and/or the filtering capacitor 61 may be located outside the output stage 13 and may be located in a separate module between the output stage 13 and the light circuit 2 or may be located inside the light circuit 2.

The example shown in the Fig. 10 is for example related to fluorescent ballasts 101 in the form of fixed frequency ballasts (the fixed frequency being a frequency in a steady state) and chip controlled ballasts. For this kind of ballasts, that typically have filament heating transformers inside the ballasts, it is usually not allowed to connect first and second outputs of the fluorescent ballast to each other and to connect third and fourth outputs of the fluorescent ballast to each other. Instead of that, some resistance needs to be introduced between the first and second outputs of the fluorescent ballast and between the third and fourth outputs of the fluorescent ballast to prevent overloading of the heating transformer inside the fluorescent ballast.

Within the scope of the present claims, each part of each one of the first and second embodiments may be combined with each part of the third embodiment, whereby the capacitor 43 will be used for coupling the interconnections 31 and 32 and whereby the inductor 41 (42) will be used for coupling the interconnection 31 (32) to the diodes 51 and 53 (52 and 54).

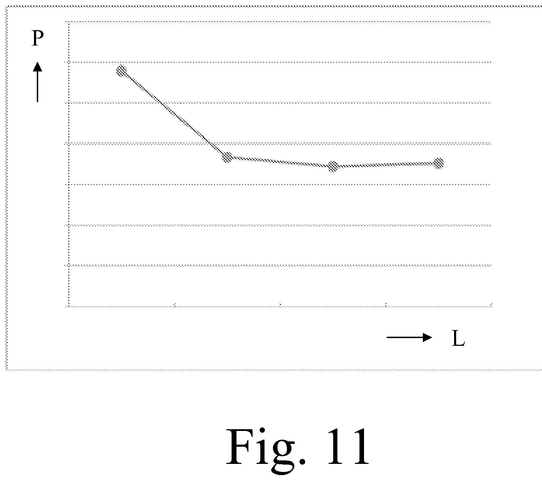

In the Fig. 11, a power (P) value versus inductance (L) value graph is shown. For relatively small and increasing inductance values of the first inductor 41, decreasing power values for the light circuit 2 are found. For relatively large and increasing inductance values of the first inductor 41, relatively stable power values for the light circuit 2 are found.

Summarizing, conversion circuits 1 convert first signals coming from fluorescent ballasts 101 into second signals for light circuits 2 comprising light emitting diodes to replace discharge lamps 102. The conversion circuits 1 comprise input stages 11 with at least two inputs 21-24, 31-32 for receiving the first signals, output stages 13 with two outputs 71-72 for supplying the second signals, and reactive stages 12 for coupling the input and output stages 11, 13. Such relatively simple conversion circuits 1 are relatively low-cost and relatively robust. The reactive stages 12 comprise reactive circuits and reduce amplitudes of one or more of the first and second signals. The reactive circuits comprise one or more inductors 41, 42 and, optionally, capacitor 43. The conversion circuits 1 may form part of the fluorescent ballasts 101 or may form part of the light circuits 2 or may partly form part of the fluorescent ballasts 101 and may partly form part of the light circuits 2.

## Claims

1. A conversion circuit (1) for converting first signals coming from a fluorescent ballast (101) into second signals for feeding a light circuit (2), the light circuit (2) comprising at least one light emitting diode, the conversion circuit (1) comprising:
- first two inputs (21, 22) coupled to each other to create a first interconnection (31);
- second two inputs (23, 24) coupled to each other to create a second interconnection (32);
- a bridge rectifier circuit (51-54) having a first input, a second input, a first output (71) and a second output (72), wherein the second interconnection (32) is coupled to the second input of the bridge rectifier circuit (51-54);
- an output stage (13) coupled to the first output (71) and the second output (72) of the bridge rectifier circuit (51-54) for supplying the second signals; and,
- a capacitor (61) coupled between the first output (71) and the second output (72),
**characterized in that** the conversion circuit (1) comprises a first inductor (41) arranged to couple the first interconnection (31) to the first input of the bridge rectifier circuit (51-54).

2. The conversion circuit (1) as defined in claim 1, wherein the capacitor (61) forms part of a high frequency filter.

3. The conversion circuit (1) as defined in claim 1, wherein the first inductor forms part of a reactive circuit.

4. The conversion circuit (1) as defined in claim 1, comprising a reactive circuit comprising the first inductor (41) and a second inductor (42) arranged to couple the second interconnection (32) to the second input of the bridge rectifier circuit (51-54).

5. The conversion circuit (1) as defined in claim 1, comprising a reactive circuit comprising a capacitor (43) coupled between the first interconnection (31) and the second interconnection (32).

6. The conversion circuit (1) as defined in claim 1, comprising a reactive circuit comprising a capacitor (43) coupled between the first interconnection (31) and the second interconnection (32), and comprising the first inductor (41).

7. The conversion circuit (1) as defined in claim 1, wherein said four inputs (21-24) are configured to be coupled to four outputs of the fluorescent ballast (101).

8. The conversion circuit (1) as defined in claim 1, wherein said four inputs (21-24) are configured to be coupled to four outputs of the fluorescent ballast (101), first and second inputs (21-22) of said first two inputs (21-22) being coupled to each other via a serial connection of first and second resistors (25-26), and third and fourth inputs (23-24) of said second two inputs (23-24) being coupled to each other via a serial connection of third and fourth resistors (27-28), wherein said first interconnection (31) is between the first and second resistors (25-26) and said second interconnection (32) is between the third and fourth resistors (27-28).

9. A circuit comprising the conversion circuit (1) as defined in claim 1, and the light circuit (2) as defined in claim 1.

10. A method for replacing a discharge lamp (102) by a light circuit (2) comprising at least one light emitting diode, the method comprising a step of installing a conversion circuit (1) as defined in claim 1 between a fluorescent ballast (101) and the light circuit (2).

## Patentansprüche

1. Umwandlungsschaltung (1) zum Umwandeln erster Signale, die von einem Leuchtstofflampen-Vorschaltgerät (101) kommen, in Signale zum Speisen einer Lichtschaltung (2), wobei die Lichtschaltung (2) mindestens eine Licht emittierende Diode umfasst, wobei die Umwandlungsschaltung (1) umfasst:
- erste zwei Eingänge (21, 22), die miteinander gekoppelt sind, um eine erste Zusammenschaltung (31) zu schaffen;
- zweite zwei Eingänge (20, 24), die miteinander gekoppelt sind, um eine zweite Zwischenschaltung (32) zu schaffen;
- eine Brückengleichrichterschaltung (51 - 54), die einen ersten Eingang, einen zweiten Eingang, einen ersten Ausgang (71) und einen zweiten Ausgang (72) aufweist, wobei die zweite Zusammenschaltung (32) mit dem zweiten Eingang der Brückengleichrichterschaltung (51-54) gekoppelt ist;
- eine Ausgangsstufe (13), die mit dem ersten Ausgang (71) und dem zweiten Ausgang (72) der Brückengleichrichterschaltung (51-54) zum Liefern der zweiten Signale gekoppelt ist; und
- einen Kondensator (61), der zwischen dem ersten Ausgang (71) und dem zweiten Ausgang (72) gekoppelt ist,
**dadurch gekennzeichnet, dass** die Umwandlungsschaltung (1) eine erste Drosselspule (41) umfasst, die eingerichtet ist, um die erste Zusammenschaltung (31) mit dem ersten Eingang der Brückengleichrichterschaltung (51-54) zu koppeln.

2. Umwandlungsschaltung (1) nach Anspruch 1, wobei der Kondensator (61) Teil eines Hochfrequenzfilters ist.

3. Umwandlungsschaltung (1) nach Anspruch 1, wobei die Drosselspule Teil einer Reaktanzschaltung ist.

4. Umwandlungsschaltung (1) nach Anspruch 1, die eine Reaktanzschaltung umfasst, die die erste Drosselspule (41) und eine zweite Drosselspule (42) umfasst, die eingerichtet ist, um die zweite Zusammenschaltung (32) mit dem zweiten Eingang der Brückengleichrichterschaltung (51-54) zu koppeln.

5. Umwandlungsschaltung (1) nach Anspruch 1, die eine Reaktanzschaltung umfasst, die einen Kondensator (43) umfasst, der zwischen der ersten Zusammenschaltung (31) und der zweiten Zusammenschaltung (32) gekoppelt ist.

6. Umwandlungsschaltung (1) nach Anspruch 1, die eine Reaktanzschaltung umfasst, die einen Kondensator (43) umfasst, der zwischen der ersten Zusammenschaltung (31) und der zweiten Zusammenschaltung (32) gekoppelt ist und die erste Drosselspule (41) umfasst.

7. Umwandlungsschaltung (1) nach Anspruch 1, wobei die vier Eingänge (41-24) konfiguriert sind, um mit vier Ausgängen des Leuchtstofflampen-Vorschaltgeräts (101) gekoppelt zu sein.

8. Umwandlungsschaltung (1) nach Anspruch 1, wobei die vier Eingänge (21-24) konfiguriert sind, um mit vier Ausgängen des Leuchtstofflampen-Vorschaltgeräts (101) gekoppelt zu sein, wobei der erste und der zweite Eingang (21-22) der ersten zwei Eingänge (21-22) miteinander über eine serielle Verbindung eines ersten und eines zweiten Widerstands (25-26) gekoppelt sind, und der dritte und der vierte Eingang (23-24) der zweiten zwei Eingänge (23-24) miteinander über eine serielle Verbindung eines dritten und vierten Widerstands (27-28) gekoppelt sind, wobei die erste Zusammenschaltung (31) zwischen dem ersten und dem zweiten Widerstand (25-26) liegt, und die zweite Zusammenschaltung (32) zwischen dem dritten und dem vierten Widerstand (27-28) liegt.

9. Schaltung, die die Umwandlungsschaltung (1) nach Anspruch 1 und die Lichtschaltung (2) nach Anspruch 1 umfasst.

10. Verfahren zum Ersetzen einer Entladungslampe (102) durch eine Lichtschaltung (2), die mindestens eine Licht emittierende Diode umfasst, wobei das Verfahren einen Schritt des Installierens einer Umwandlungsschaltung (1) nach Anspruch 1 zwischen einem Leuchtstofflampen-Vorschaltgerät (101) und der Lichtschaltung (2) umfasst.

## Revendications

1. Circuit de conversion (1) pour la conversion de premiers signaux venant d'un ballast fluorescent (101) en seconds signaux pour l'alimentation d'un circuit de lumière (2), le circuit de lumière (2) comprenant au moins une diode électroluminescente, le circuit de conversion (1) comprenant :
- deux premières entrées (21, 22) couplées l'une à l'autre pour créer une première interconnexion (31) ;
- deux secondes entrées (23, 24) couplées l'une à l'autre pour créer une seconde interconnexion (32) ;
- un circuit de rectificateur de pont (51-54) présentant une première entrée, une seconde entrée, une première sortie (71) et une seconde sortie (72), dans lequel la seconde interconnexion (32) est couplée à la seconde entrée du circuit de rectificateur de pont (51-54) ;
- un étage de sortie (13) couplé à la première sortie (71) et à la seconde sortie (72) du circuit de rectificateur de pont (51-54) pour l'alimentation des seconds signaux ; et
- un condensateur (61) couplé entre la première sortie (71) et la seconde sortie (72),
**caractérisé en ce que** le circuit de conversion (1) comprend un premier inducteur (41) agencé pour coupler la première interconnexion (31) à la première entrée du circuit de rectificateur de pont (51-54).

2. Circuit de conversion (1) selon la revendication 1, dans lequel le condensateur (61) forme une partie d'un filtre haute fréquence.

3. Circuit de conversion (1) selon la revendication 1, dans lequel le premier inducteur forme une partie d'un circuit réactif.

4. Circuit de conversion (1) selon la revendication 1, comprenant un circuit réactif comprenant le premier inducteur (41) et un second inducteur (42) agencés pour coupler la seconde interconnexion (32) à la seconde entrée du circuit de rectificateur de pont (51-54).

5. Circuit de conversion (1) selon la revendication 1, comprenant un circuit réactif comprenant un condensateur (43) couplé entre la première interconnexion (31) et la seconde interconnexion (32).

6. Circuit de conversion (1) selon la revendication 1, comprenant un circuit réactif comprenant un condensateur (43) couplé entre la première interconnexion (31) et la seconde interconnexion (32), et comprenant le premier inducteur (41).

7. Circuit de conversion (1) selon la revendication 1, dans lequel lesdites quatre entrées (21-24) sont configurées pour être couplées à quatre sorties du ballast fluorescent (101).

8. Circuit de conversion (1) selon la revendication 1, dans lequel lesdites quatre entrées (21-24) sont configurées pour être couplées aux quatre sorties du ballast fluorescent (101), des première et seconde entrées (21-22) desdites deux premières entrées (21-22) étant couplées l'une à l'autre via une connexion sérielle de première et seconde résistances (25-26), et des troisième et quatrième entrées (23-24) desdites deux secondes entrées (23-24) étant couplées l'une à l'autre via une connexion sérielle de troisième et quatrième résistances (27-28), dans lequel ladite première interconnexion (31) est entre les première et seconde résistances (25-26) et ladite seconde interconnexion (32) est entre les troisième et quatrième résistances (27-28).

9. Circuit comprenant le circuit de conversion (1) selon la revendication 1, et le circuit de lumière (2) selon la revendication 1.

10. Procédé de remplacement d'une lampe de décharge (102) par un circuit de lumière (2) comprenant au moins une diode électroluminescente, le procédé comprenant une étape d'installation d'un circuit de conversion (1) selon la revendication 1 entre un ballast fluorescent (101) et le circuit de lumière (2).
